# EUROPÄISCHE PATENTANMELDUNG

(11) **EP 1 247 979 A2**
(43) Veröffentlichungstag der Anmeldung: **09.10.2002**
(21) Anmeldenummer: 02003440.1
(22) Anmeldetag: 14.02.2002
(51) Int. Cl.: F02N 11/04, F02N 11/08, H01G 9/00

(54) **System zur Speicherung von elektrischer Energie, sowie Verfahren zum Betreiben eines solchen Energiespeichersystems**

(30) Priorität: 03.04.2001 DE 10116463
(71) Anmelder: Continental ISAD Electronic Systems GmbH & Co. oHG, 86899 Landsberg/Lech (DE)
(72) Erfinder: Malik, Manfred, 82377 Penzberg (DE)
(74) Vertreter: Niederkofler, Oswald A., Dipl.-Phys.

(57) **Zusammenfassung**

Die Erfindung betrifft ein System zur Speicherung von elektrischer Energie, z.B. für ein Kraftfahrzeug, mit einem Speichermodul (1) aus einem oder mehreren Kondensatorspeichern (C₁,...,C_{N}), insbesondere aus elektrochemischen Kondensatoren, einer Einrichtung (22, R₁) zur Messung der Temperatur der oder in der Nähe der Kondensatorspeicher (C₁,...,C_{N}), und einer oder mehreren Steuereinrichtungen (24, 26), welche die an den Kondensatorspeichern (C₁,...,C_{N}) anliegende Spannung derart steuern, daß die maximal an dem Speichermodul (1) und/oder an den einzelnen Kondensatorspeichern (C₁,...,C_{N}) anliegende Spannung mit abnehmender Temperatur zunimmt. Die Erfindung nutzt die Erkenntnis, daß die Alterung von Kondensatorspeichern (C₁,..., C_{N}) und insbesondere von elektrochemischen Kondensatoren neben der Betriebsspannung auch stark von der Temperatur abhängt. Durch eine temperaturabhängige Steuerung der Kondensatorspannung kann daher die Alterung der Kondensatorspeicher möglichst gering gehalten werden. Die Erfindung betrifft auch ein entsprechendes Verfahren zum Betreiben eines Energiespeichersystems.

## Beschreibung

Die vorliegende Erfindung betrifft ein System zur Speicherung von elektrischer Energie, z.B. in einem Kraftfahrzeug, mit einem Speichermodul aus Kondensatorspeichern, sowie ein Verfahren zum Betreiben eines solchen Systems.

Für die Speicherung von elektrischer Energie z.B. in Elektrofahrzeugen, Hybridfahrzeugen etc. kommen heutzutage neben wiederaufladbaren elektrochemischen Speichern auch Kondensatorspeicher zum Einsatz. Die Wahl des Speichermediums hängt von den jeweiligen Anforderungen an den Energiespeicher ab: Elektrochemische Speicher, wie zum Beispiel Nickel-Cadmium, Nickel-Metallhydrid, Blei-Säure-Batterien oder Lithiumbatterien, sind wegen ihrer hohen spezifischen Speicherkapazität (Energiedichte) insbesondere als Langzeitspeicher geeignet. Unter "Langzeitspeicher" wird ein Energiespeicher verstanden, der hohe Energienmengen speichern, im Vergleich dazu aber eine relativ geringe Leistung abgeben kann. Für solche Anwendungen, bei denen über kurze Zeit hohe Leistungen benötigt werden, werden hingegen bevorzugt Kondensatoren als "Kurzzeitspeicher" verwendet, z.B. Elektrolyt- oder Keramikkondensatoren. Da die Ladungsträger bei diesen Kondensatoren rein physikalisch (elektrostatisch) gespeichert sind, kann die gespeicherte Energie innerhalb von 10⁻³ bis 10⁻⁵ s freigesetzt werden. Die Leistungsdichte ist daher mit bis zu 100000 W/kg ca. 100 Mal größer als bei elektrochemischen Speichern. Dafür weisen Kondensatorspeicher eine erheblich geringere spezifische Speicherkapazität auf als elektrochemische Speicher.

Für viele Anwendungen ist insbesondere die Kombination von einem elektrochemischen Speicher hoher Energiedichte mit einem Kondensatorspeicher hoher Leistungsdichte sinnvoll. Die DE 198 40 819 offenbart z.B. die Verwendung von Hochleistungskondensatoren für einen Kurzzeitspeicher eines Kraftfahrzeugs, welcher beim Starten des Verbrennungsmotors die gesamte oder einen Teil der Startenergie an den Starter liefert. Die Aufladung des Kurzzeitspeichers erfolgt als Startvorbereitung durch Entnahme aus einer elektrochemischen Batterie. Auf diese Weise kann die der Batterie über einen längeren Zeitraum entnommene Energie in kürzester Zeit an den Starter abgegeben werden und der Verbrennungsmotor auch dann gestartet werden, wenn die von der Batterie alleine bereitgestellte Leistung hierzu nicht ausreichen würde.

Seit einigen Jahren ist eine neue Generation von Kondensatoren erhältlich, die sogenannten elektrochemischen Kondensatoren, auch als Doppelschichtkondensatoren oder Superkondensatoren bezeichnet. Solche Kondensatoren bestehen aus zwei porösen Elektroden, i.d.R. aus Aktivkohle, mit einer sehr hohen internen Oberfläche von bis zu 10000 m²/g. Die Elektroden sind mit einem Elektrolyt getränkt. Beim Anlegen einer Spannung lagern sich Ionen des Elektrolyt an die Elektroden an. Es bildet sich eine sog. elektrische Doppel- oder Grenzschicht, die aus einer Schicht Elektronenladung im Festkörper und einer angrenzenden Schicht Ionenladung im Elektrolyt besteht. Als Dielektrikum fungiert z.B. das an die Ionen angelagerte Wasser, so daß der Abstand der "Kondensatorplatten" im Durchmesserbereich des Wassermoleküls liegt. Aus diesem extrem niedrigen Abstand der Ladungsschichten und der großen Oberfläche der Aktivkohleelektroden ergeben sich extrem hohe Kapazitäten von ca. 200 F/g (siehe L.F. Trueb, P. Rüetschi: "Batterien und Akkumulatoren - Mobile Energiequellen für heute und morgen", Springer-Verlag Berlin 1998). Doppelschichtkondensatoren sind im Handel z.B. unter den Namen "UltraCap" von Siemens Matsushita oder "GoldCap" von Panasonic erhältlich.

Die Kapazität des Doppelschichtkondensators kann noch weiter erhöht werden, wenn an der Elektrodenoberfläche außerdem eine schnell ablaufende und reversible Redoxreaktion stattfindet. In einem solchen Fall addieren sich die Doppelschichtkapazität und die chemisch bedingte, sog. Faraday- oder Pseudokapazität. Als Elektrode kann zum Beispiel Ruthenium- oder Iridiumoxid verwendet werden, welches beim Laden und Entladen sehr leicht und reversible zwischen den Oxidationszuständen +3 bis +4 hin- und herpendelt. Dank der Redoxreaktion ist die an der Elektrodenoberfläche gespeicherte Ladung eines solchen Metalloxidkondensators, auch Faraday'scher Kondensator genannt, außerordentlich hoch. Die Lade- und Entladevorgänge laufen zwar langsamer ab als bei elektrostatischen Kondensatoren, jedoch immer noch sehr viel schneller als bei rein elektrochemischen Speichern.

Doppelschicht- und Faraday'sche Kondensatoren weisen eine erheblich größere Energiedichte als konventionelle Kondensatoren auf und sind daher besonders als Kurzzeitspeicher geeignet. Die Lade- bzw. Entladezeit beträgt ca. 0,3 bis 30 Sekunden, und die Energie kann über einige Tage bis Wochen gehalten werden (vgl. Thomas Dietrich "Kondensator-Power für innovative Applikationen", Elektronik, Heft 09/99, Seiten 72-77).

Die Brauchbarkeitsdauer von elektrochemischen Kondensatoren wird i.d.R. mit ca. 10 Jahren angegeben. In der Praxis ist diese Lebensdauer jedoch kaum erreichbar. Elektrochemische Kondensatoren dürfen nämlich nur bei relativ niedrigen Spannungen betrieben werden. Bei höheren Spannungen setzt die elektrochemische Zersetzung (Elektrolyse) des Elektrolyts ein, was zur irreversiblen Zerstörung des Kondensators führt. Bei Kondensatoren mit wäßrigem Elektrolyt entsteht hierbei H₂ und O₂, während bei der Elektrolyse von organischem Elektrolyt z. B. Kohlendioxid entsteht. Der hierdurch verursachte Gasdruck weitet das Gehäuse und läßt den Innenwiderstand des Kondensators ansteigen. Bei Anwendungen im Kraftfahrzeug ist die Lebensdauer eines Doppelschicht- oder Faraday'schen Kondensators daher auf ca. ein Jahr beschränkt.

Die Erfindung hat sich das Ziel gesetzt, ein System zur Speicherung von elektrischer Energie mit Kondensatorspeichern bereitzustellen, bei welchem die Kondensatorspeicher bei möglichst hohen Spannungen betrieben werden können und gleichzeitig die gewünschte Lebensdauer erreichen.

Die Erfindung stellt hierzu ein System zur Speicherung von elektrischer Energie, z.B. in einem Kraftfahrzeug, mit einem Speichermodul aus einem oder mehreren Kondensatorspeichern zur Verfügung. Das System weist weiterhin eine Einrichtung zur Messung der Temperatur der oder in der Nähe der Kondensatorspeicher auf, sowie eine oder mehrere Steuereinrichtungen, welche die an den Kondensatorspeichern anliegende Spannung derart steuern, daß die maximal an dem Speichermodul und/oder an den einzelnen Kondensatorspeichern anliegende Spannung mit abnehmender Temperatur zunimmt.

Die Erfindung stellt auch ein entsprechendes Verfahren zum Betreiben eines Energiespeichersystems mit einem Speichermodul aus einem oder mehreren Kondensatorspeichern bereit, bei welchem die an den Kondensatorspeichern anliegende Spannung derart gesteuert wird, daß die maximal an dem Speichermodul und/oder an den einzelnen Kondensatorspeichern anliegende Spannung mit abnehmenden Temperaturen auf einen höheren Wert eingestellt wird.

Unter Kondensatorspeichern werden hier alle Arten von Kondensatoren verstanden, also auch Elektrolyt- und Keramikkondensatoren, insbesondere jedoch elektrochemische Kondensatoren wie z.B. Doppelschicht- oder Faraday'sche Kondensatoren.

Die Erfindung nutzt die Erkenntnis, daß die Alterung von Kondensatorspeichern und insbesondere elektrochemischen Kondensatoren neben der Betriebsspannung auch stark von der Temperatur beeinflußt wird. Die vorstehend erwähnte Zersetzung des Elektrolyts bei hohen Spannungen findet nämlich bei hohen Temperaturen beschleunigt statt. Aus diesem Grund stellt der von den Herstellern genannte Arbeitsbereich der Betriebsspannung, z.B. 0 bis 2,3 V bei einem UltraCap, nur einen Anhaltspunkt für den tatsächlichen Spannungsbereich dar, in dem der Kondensatorspeicher betrieben werden kann, ohne einer nennenswerten Alterung ausgesetzt zu sein. Während bei hohen Temperaturen die Zersetzung des Elektrolyts schon bei Spannungen innerhalb des angegebenen Arbeitsbereichs, z.B. bei 2,1 V einsetzt, kann der Kondensator bei niedrigen Temperaturen u. U. sogar auf höhere Spannungen, z.B. bis auf 3 V, aufgeladen werden. Die Erfindung schafft eine entsprechende temperaturabhängige Steuerung der Kondensatorspannung durch eine oder mehrere Steuereinrichtungen, welche die maximal an dem Speichermodul oder an den einzelnen Kondensatorspeichern anliegende Spannung derart vorteilhaft reguliert, daß die Alterung der Kondensatorspeicher möglichst gering gehalten wird.

Die abhängigen Ansprüche haben vorteilhafte Ausgestaltungen der erfindungsgemäßen Vorrichtung und des erfindungsgemäßen Verfahrens zum Gegenstand.

Vorzugsweise handelt es sich bei dem oder den Kondensatorspeichern um elektrochemische Kondensatoren, insbesondere Doppelschicht-Kondensatoren oder Mischformen aus Doppelschicht-Kondensatoren und chemischen Speichern, wie z.B. Faraday'schen Kondensatoren. Diese Kondensatorspeicher zeichnen sich durch besonders große Kapazitätswerte aus, sind aber stark von dem Problem der vorzeitigen Alterung durch Zersetzung des Elektrolyts betroffen, so daß die Erfindung hier besonders vorteilhaft ist.

Nach einer bevorzugten Ausführungsform der Erfindung wird die Ladespannung des Speichermoduls aus Kondensatorspeichern durch eine leistungselektronische Funktionseinheit, z.B. einen Gleichspannungs-Gleichspannungs-Wandler, eingestellt. Die an den Kondensatorspeichern gemessene Temperatur wird hierbei einer Steuereinrichtung zugeführt, welche der leistungselektronischen Funktionseinheit eine maximale Ladespannung vorgibt, die mit abnehmender Temperatur zunimmt. Die Ladespannung der Kondensatorspeicher wird also auf einen bestimmten, temperaturabhängigen Wert begrenzt, welcher bevorzugt geringfügig niedriger als die Zersetzungsspannung bei der jeweiligen Temperatur ist. Durch diese Maßnahme ist es möglich, die Kondensatorspeicher bei einer möglichst hohen Spannung zu betreiben, gleichzeitig aber eine vorzeitige Alterung der Kondensatorspeicher durch Zersetzung des Elektrolyts zu vermeiden und so die gewünschte Lebensdauer zu erreichen. Da die im Kondensator gespeicherte Energie E = % C U² vom Quadrat der Ladespannung abhängt, ist es vorteilhaft, die Kondensatoren jeweils auf die größtmögliche Spannung aufzuladen, um später hohe Energien entnehmen zu können.

Vorzugsweise weist das Energiespeichersystem neben dem als Kurzzeitspeicher verwendeten Speichermodul aus Kondensatorspeichern einen Langzeitspeicher, insbesondere einen elektrochemischen Speicher auf. Dieser kann beispielsweise von einer Schwefelsäure-Blei-Batterie gebildet werden. Durch die Kombination von Kurz- und Langzeitspeichern kann das Energiespeichersystem optimal an den Energiebedarf der jeweiligen Applikation angepaßt werden. Der elektrochemische Speicher kann große Energiemengen über lange Zeit speichern und die "Grundlast" abdecken, während der Kondensatorspeicher bei Spitzenbedarf kurzzeitig hohe Leistungen abgeben kann. Insbesondere in Kraftfahrzeugen ist der Einsatz von Energiespeichersystemen aus kombinierten Lang- und Kurzzeitspeichern sinnvoll, da z.B. zum Starten eines Verbrennungsmotors kurzzeitig eine wesentlich höhere elektrische Leistung benötigt wird als bei normaler Fahrt. In Elektro- oder Hybridfahrzeugen kann der Kurzzeitspeicher zusätzlich dazu eingesetzt werden, Energie zum Beschleunigen des Fahrzeugs bereitzustellen, sowie die beim regenerativen Bremsen zurückgewonnene Energie zu speichern. Hierdurch braucht der elektrochemische Speicher nur für den normalen Fahrbetrieb ausgelegt zu werden.

Besonders vorteilhaft bei der Verwendung des erfindungsgemäßen Energiespeichersystems in Kombination mit einem elektrochemischen Speicher erweist sich das umgekehrte Temperaturverhalten von elektrochemischen Speichern und Kondensatorspeichern. Während der Innenwiderstand z.B. einer Schwefelsäure-Blei-Batterie mit abnehmender Temperatur ansteigt, was die entnehmbare Leistung stark einschränkt, kann ein Kondensatorspeicher bei niedrigen Temperaturen auf höhere Spannungen als sonst aufgeladen werden, wodurch die entnehmbare Energie und Leistung zunimmt. Diese beiden gegenläufigen Effekte können sich bis zu einem gewissen Grad ausgleichen. Besonders vorteilhaft kann dies bei einem Kaltstart eines Verbrennungsmotors eingesetzt werden. Bei niedrigen Temperaturen setzt der Verbrennungsmotor dem Starter durch die sehr hohen Scherkräfte des Motoröls nämlich ein beträchtliches Moment entgegen. Wird die Startenergie einem elektrochemischen Speicher entnommen, passiert es bei niedrigen Temperaturen daher nicht selten, daß der elektrochemische Speicher bei einem Kaltstart versagt. Wird die Startenergie hingegen von einem Kondensatorspeicher zur Verfügung gestellt, sind bei niedrigen Temperaturen sogar höhere Entladeströme verfügbar, da die Kondensatorspeicher - ohne eine Lebensdauerverkürzung zu erleiden - auf höhere Spannungen als bei warmen Temperaturen aufgeladen werden können, z.B. bis auf 3V bei einem Kaltstart. Bevorzugt werden die Kondensatorspeicher hierbei vor dem Start durch Entnahme aus dem elektrochemischen Speicher aufgeladen. Da der Ladevorgang der Kondensatorspeicher einen längeren Zeitraum als der Startvorgang selbst beanspruchen darf, kann dies auch durch den wegen der tiefen Temperatur leistungsschwachen elektrochemischen Speicher geschehen.

Bevorzugt wird die elektrische Energie zum Aufladen des Speichermoduls aus Kondensatorspeichern und/oder des Langzeitspeichers von einem Generator bereitgestellt, der von einem Verbrennungsmotor angetrieben wird. Besonders bevorzugt ist der Generator eine Drehstrommaschine, wobei die vom Generator erzeugte Spannung durch einen Gleichrichter in einen Gleichspannungs-Zwischenkreis gespeist wird. Vorteilhaft sind der elektrochemische Speicher und das Speichermodul aus Kondensatorspeichern ebenfalls an diesen Zwischenkreis angeschlossen, der sich z. B. auf einem Spannungsniveau von 40-350 V befindet. Da verschiedene Verbraucher eines Kraftfahrzeugs im allgemeinen bei niedrigeren Spannungen vorteilhafter arbeiten, ist vorteilhaft ein Niederspannungsteil des Bordnetzes vorgesehen, welches auf einer niedrigeren Spannung als der Zwischenkreis liegt.

Bevorzugt ist der Generator ein Kurbelwellen-Starter-Generator. Hierbei handelt es sich um eine sowohl als Starter als auch als Generator fungierende elektrische Maschine, die konzentrisch auf der Kurbelwelle eines Verbrennungsmotors sitzt und vorzugsweise ohne Zwischenübersetzung drehfest mit dieser Welle verbunden ist.

Doppelschichtkondensatoren werden in einem Speichermodul i.d.R. zu einer Reihenschaltung zusammengeschlossen, damit Ströme bei einer höheren Spannung als der Betriebsspannung der einzelnen Zellen von ca. 2,3 V abgegeben werden können. Nach einem weiteren bevorzugten Aspekt der Erfindung werden die Spannungsdifferenzen zwischen einzelnen, in Reihe geschalteten Kondensatorspeichern des Speichermoduls durch eine sog. Symmetrierschaltung ausgeglichen, indem parallel zu jedem Kondensatorspeicher ein Lastwiderstand zuschaltbar ist, über den der Kondensatorspeicher zumindest teilweise entladbar ist. Eine derartige Symmetrierschaltung wird auch mit "Cell Balancing" bezeichnet und dient dazu, zu verhindern, daß sich aufgrund von Kapazitätsvarianzen Spannungsdifferenzen zwischen den einzelnen Kondensatoren ausbilden. Da Kapazität und Spannung umgekehrt proportional zueinander sind, liegt bei einer Reihenschaltung von unterschiedlich großen Kondensatoren an dem Kondensator mit der kleinsten Kapazität die größte Spannung an, dieser ist also der stärksten Alterung durch Zersetzung des Elektrolyts ausgesetzt. Daher werden parallel zu jedem Kondensatorspeicher gleich große Lastwiderstände geschaltet, über die sich die Kondensatorspeicher bis auf ein einheitliches Spannungsniveau entladen, und somit eine ungleiche Belastung der Kondensatorspeicher verhindert.

Besonders bevorzugt werden die Lastwiderstände der Symmetrierschaltung durch ein temperaturempfindliches Schaltelement bei Überschreiten einer bestimmten Temperatur zugeschaltet. Bevorzugt handelt es sich bei dem temperaturempfindlichen Schaltelement um einen Heißleiter oder NTC-Widerstand (NTC: Negative Temperature Coefficient) oder eine temperaturabhängige Diode, die bei Überschreiten einer bestimmten Temperatur durchbricht. Durch diese Maßnahme wird die an jedem einzelnen Kondensatorspeicher anliegende Spannung bei hohen Temperaturen automatisch gesenkt, die Symmetrierschaltung fungiert also als eine Art "Sicherung", die die Kondensatorspeicher bei hohen Temperaturen vor hoher Spannungsbeaufschlagung und damit vor erhöhter Alterung schützt. Bevorzugt ist die Symmetrierschaltung immer aktiv, so daß durch sie auch ein plötzlicher Temperaturanstieg bei abgeschaltetem Motor ausgeglichen werden kann: Sind z. B. die Kondensatorspeicher in einem Speichermodul eines Kraftfahrzeugs am kühlen Morgen auf eine hohe Spannung aufgeladen worden, und steigt die Temperatur tagsüber im abgestellten Fahrzeug an, so werden die Kondensatorspeicher automatisch durch die Symmetrierschaltung soweit entladen, daß keine erhöhte Alterung der Kondensatorspeicher auftritt.

Nach einem bevorzugten Aspekt des erfindungsgemäßen Verfahrens wird einer Steuereinrichtung eine von der angestrebten Lebensdauer der Kondensatorspeicher abhängige mittlere Arbeitsspannung vorgegeben, wobei die Steuereinrichtung die leistungselektronische Funktionseinheit, die die Ladespannung am Speichermodul einstellt, und/oder den Generator so steuert, daß die Spannung des Speichermoduls nach jeder Energieaufnahme oder -abgabe auf die Arbeitsspannung zurückgeführt wird. Die Arbeitsspannung wird vorteilhaft so gewählt, daß das als Kurzzeitspeicher fungierende Speichermodul einerseits z.B. die zum Beschleunigen eines Fahrzeugs geforderte Leistung abgeben kann, andererseits auch kurzzeitig Energie aufnehmen kann, z.B. durch regeneratives Bremsen erzeugte Energie. Nach einer derartigen Energieabgabe oder -aufnahme wird die Spannung des Speichermoduls z.B. durch Energieabgabe an einen elektrochemischen Speicher oder durch Erhöhung der Generatorleistung wieder auf die Arbeitsspannung zurückgeführt. Auf diese Weise steht das Speichermodul aus Kondensatorspeichern jederzeit für kurzfristige Energieaufnahmen oder - abgaben zur Verfügung, wobei Generator und elektrochemischer Speicher die Energieentnahmen bzw. -aufnahmen über einen längeren Zeitraum ausgleichen. Die mittlere Arbeitsspannung wird bevorzugt so gewählt, daß ein im Mittel auf diese Spannung aufgeladener Kondensatorspeicher im Schnitt eine vorgegebenen angestrebte Lebensdauer erreicht. Je nach Anwendung kann also eine hohe Arbeitsspannung vorgegeben werden, bei welcher das Speichermodul hohe Leistungen abgeben kann, und dafür eine niedrige Lebensdauer in Kauf genommen werden, oder umgekehrt.

Besonders bevorzugt wird die Arbeitsspannung in Abhängigkeit von der Temperatur der Kondensatorspeicher so angepaßt, daß die Arbeitsspannung mit abnehmender Temperatur zunimmt. Hierdurch kann die vorgegebenen Lebensdauer mit größerer Sicherheit erreicht werden, als dies allein durch das Vorgeben einer nicht-temperaturabhängigen Arbeitsspannung möglich wäre, da die Alterung von Kondensatorspeichern, insbesondere elektrochemischer Kondensatoren, neben der Spannung auch stark von der Temperatur abhängt. Vorteilhaft wird die Arbeitsspannung daher durch die Steuereinrichtung so eingestellt, daß die Spannung der Kondensatorspeicher sich bei jeder Temperatur in einem alterungsarmen Bereich bewegt.

Vorteilhaft wird die Arbeitsspannung außerdem von der momentanen Geschwindigkeit des Fahrzeugs abhängig gemacht, da die Wahrscheinlichkeit einer Energieabgabe bzw. -aufnahme bei verschiedenen Fahrgeschwindigkeiten unterschiedlich ist. Bei hoher Geschwindigkeit (z.B. >20 km/h) ist eher mit einem Bremsvorgang zu rechnen, so daß das Speichermodul vorteilhaft zur Aufnahme von rekuperierter Bremsenergie bereit ist und die Kondensatorspeicher daher auf einer niedrigen Arbeitsspannung gehalten werden. Niedrige Geschwindigkeiten sind hingegen häufig ein Vorzeichen eines Anhaltens und ggf. späteren Neustarts. Bei Unterschreiten einer bestimmten Grenzgeschwindigkeit wird daher vorteilhaft die Arbeitsspannung auf einen Wert nahe der bei der momentanen Temperatur maximal zulässigen Spannung eingestellt, damit für das Starten des Verbrennungsmotors und/oder den Beschleunigungsvorgang Energie zur Verfügung steht.

Die Erfindung wird nun anhand von Ausführungsbeispielen und der beigefügten Zeichnung näher erläutert. In der Zeichnung zeigen:
- Fig. 1: ein Diagramm der Lebensdauer eines elektrochemischen Kondensators als Funktion der Spannung bei verschiedenen Temperaturen;
- Fig.2a: eine Schemadarstellung der wichtigsten Funktionseinheiten eines ersten Ausführungsbeispiels eines Energiespeichersystems in einem Kraftfahrzeug;
- Fig.2b: eine Schemadarstellung der wichtigsten Funktionseinheiten eines zweiten Ausführungsbeispiels eines Energiespeichersystems in einem Kraftfahrzeug;
- Fig. 3: ein Diagramm einer beispielhaften Steuerung der Arbeitsspannung und der maximalen Spannung in Abhängigkeit von der Kondensatortemperatur.

- Fig. 4: ein Prinzipschaltbild eines ersten Ausführungsbeispiels einer Symmetrierschaltung;
- Fig. 5: ein Prinzipschaltbild eines zweiten Ausführungsbeispiels einer Symmetrierschaltung.
In den Figuren sind funktionsgleiche oder -ähnliche Teile mit gleichen Bezugszeichen gekennzeichnet.

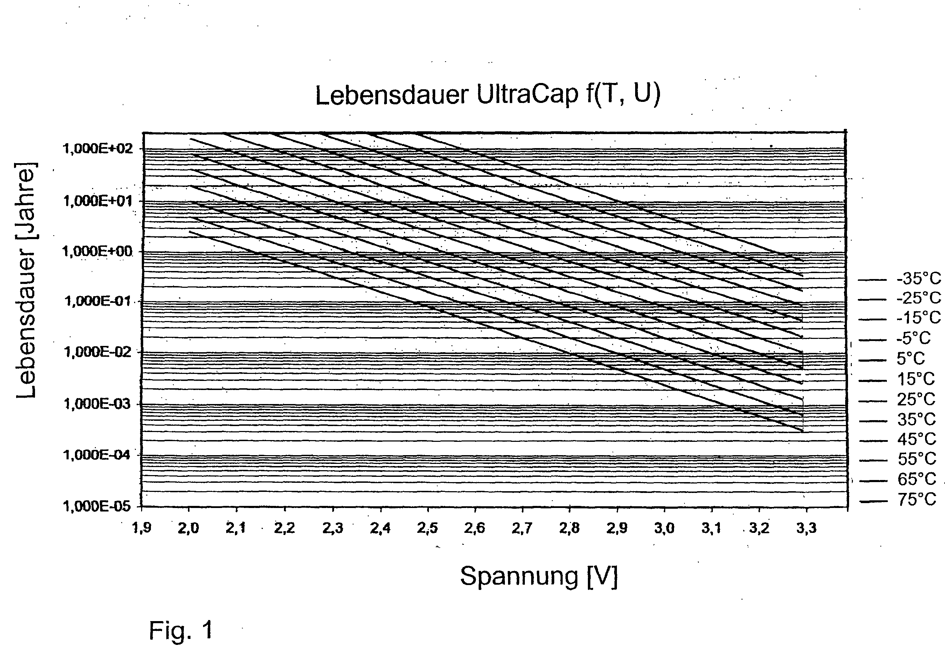

Fig. 1 veranschaulicht die Abhängigkeit der Lebensdauer von Doppelschichtkondensatoren (hier vom Typ UltraCap) von der Betriebsspannung bei verschiedenen Arbeitstemperaturen. Der übliche Arbeitsbereich der Ultracaps liegt zwischen 0 und 2,3V bei zulässigen Arbeitstemperaturen zwischen -35 und +75°C. Die übliche Lebensdauer wird vom Hersteller mit 10 Jahren angegeben. Aus dem Diagramm wird jedoch ersichtlich, daß diese Lebensdauer bei einer Betriebsspannung von 2,3 V nur bei Betriebstemperaturen bis zu 25°C erreichbar ist. Bei einer Temperatur von 75°C ist hingegen nur eine Lebensdauer von 2,5 Monaten zu erwarten. Andererseits erkennt man, daß die angegebene Arbeitsspannung von 2,3 V bei niedrigen Temperaturen durchaus überschritten werden darf, ohne eine vorschnelle Alterung der Kondensatoren zu verursachen. So kann ein UltraCap bei -25°C bis auf 2,8 V aufgeladen werden, ohne die voraussichtliche Lebensdauer von 10 Jahren zu unterschreiten, während er bei 55°C nur bis auf 2,0 V aufgeladen werden darf, wenn eine Lebensdauer von 10 Jahren erreicht werden soll.

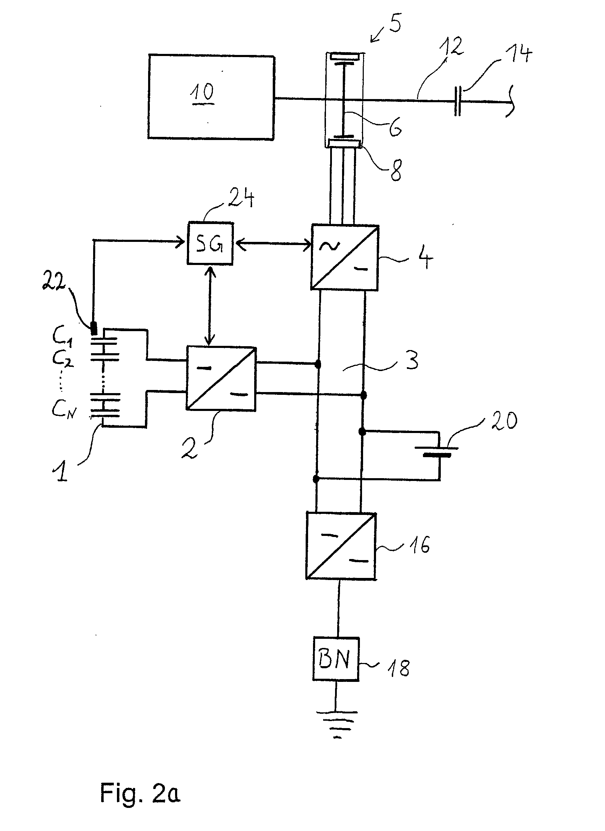

Das Energiespeichersystem nach Fig. 2a ist für ein Kraftfahrzeug, z.B. einen Personenkraftwagen, bestimmt. Ein Speichermodul 1 besteht im wesentlichen aus einer Reihenschaltung von N Kondensatorspeichern C₁,C₂,...,C_{N}. Das Speichermodul 1 ist über einen Gleichspannungs-Gleichspannungs-Wandler (DC-DC-Wandler) 2 mit einem Gleichspannungs-Zwischenkreis 3 gekoppelt. Durch den DC-DC-Wandler 2 ist die an dem Speichermodul 1 anliegende Ladespannung frei einstellbar. Außerdem dient er dazu, die beim Entladen der Kondensatoren C₁ bis C_{N} dem Speichermodul 1 entnommene Energie auf das Spannungsniveau des Zwischenkreises 3 hoch- oder tiefzusetzen; er ist daher als bidirektionaler Wandler ausgebildet. An den Zwischenkreis 3 ist außerdem über einen Wechselrichter 4 (einen Gleichspannungs-Wechselspannungs-Umrichter) eine als Generator dienende elektrische Maschine 5, hier eine Asynchron-Drehstrommaschine, angeschlossen. Diese wird durch einen Verbrennungsmotor 10 angetrieben, welcher ein Drehmoment über eine Antriebswelle 12, eine Kupplung 14 und weitere, nicht gezeigte Teile eines Antriebsstrangs auf die Antriebsräder des Fahrzeugs abgibt. Die elektrische Maschine 5 weist einen direkt koaxial auf der Antriebswelle 12 sitzenden und drehfest mit ihr verbundenen Läufer 6, sowie einen z.B. am Gehäuse des Verbrennungsmotors 10 abgestützten Ständer 8 auf. Die Wicklung des Ständers 6 wird durch den Umrichter 4 mit elektrischen Strömen und Spannungen frei einstellbare Amplitude, Phase und Frequenz gespeist. In dem hier gezeigten Beispiel dient die elektrische Maschine gleichzeitig auch als Starter, bei anderen Ausführungsformen sind Starter und Generator jedoch getrennt verwirklicht. Die elektrische Maschine 5 kann vorzugsweise auch zum regenerativen Bremsen verwendet werden, wobei Bewegungsenergie des Fahrzeugs durch die im Generatorbetrieb arbeitende elektrische Maschine 5 in elektrische Energie umgewandelt wird. Im Motorbetrieb kann die elektrische Maschine 5 auch zum Antrieb des Fahrzeugs beitragen.

Im Zwischenkreis liegt weiterhin ein Tiefsetzsteller 16, der mit einem Fahrzeugbordnetz 18 gekoppelt ist. Das Bordnetz 18 liegt vorteilhaft auf einem Spannungsniveau von z.B. 12 oder 24 V. Der Zwischenkreis 3 liegt demgegenüber auf einer erhöhten Spannung von 42 V. An den Zwischenkreis 3 ist weiterhin ein elektrochemischer Speicher 20, beispielsweise eine Schwefelsäure-Blei-Batterie angeschlossen. Bei stehendem Verbrennungsmotor 10 versorgt der elektrochemische Speicher 20 die Verbraucher des Fahrzeugbordnetzes 18, während bei laufendem Verbrennungsmotor 10 die elektrische Maschine 5 als Generator zur Ladung des elektrochemischen Speichers 20, des Speichermoduls 1 und zur Versorgung des Fahrzeugbordnetzes 18 dient.

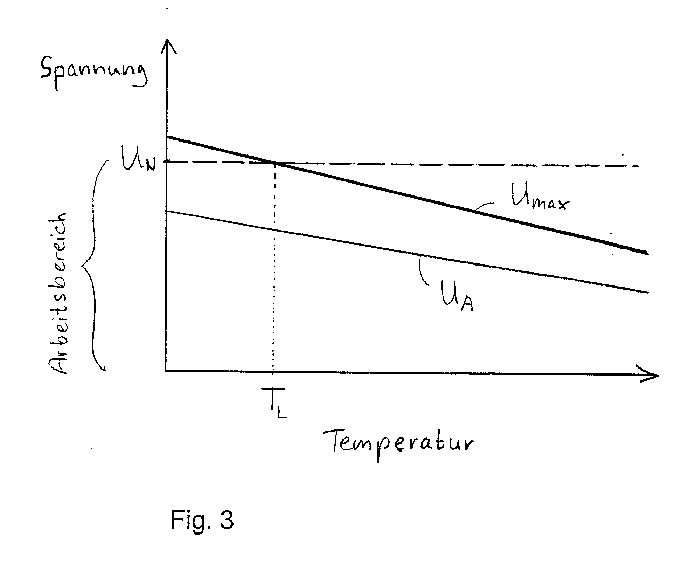

An oder in der Nähe des Speichermoduls 1 ist ein Temperaturfühler 22 angeordnet, der die jeweils momentane Temperatur der Kondensatorspeicher C₁,C₂,...,C_{N} mißt. Der Temperaturfühler 22 weist beispielsweise ein Fühlerelement mit elektrischem Widerstandsmaterial mit positivem oder negativem Temperaturkoeffizienten (PTC bzw. NTC) auf, welches in Wärmeleitungskontakt mit einem oder mehreren Kondensatorspeichern des Speichermoduls 1 steht. Ein Steuergerät 24 erhält die vom Temperaturfühler 22 gelieferte temperaturbezogene Information, ermittelt hieraus anhand der nachfolgend in Fig. 3 gezeigten Abhängigkeit die maximal zulässige Ladespannung, bei der eine beschleunigte Alterung der Kondensatorspeicher vermieden wird, und gibt dem DC-DC-Wandler 2 entsprechende Anweisung, das Speichermodul 1 nicht mit einer größeren Spannung zu beaufschlagen. Das Steuergerät 24 steuert daneben auch den Wechselrichter 4, indem es ihm Amplitude, Phase und Frequenz des an die elektrische Maschine 5 zu liefernden 3-Phasen-Stroms vorgibt. Es kann hierzu Informationssignale von einem (nicht gezeigten) Drehwinkelgeber erhalten, aus denen es die normale Winkelstellung und Drehzahl der Antriebswelle 12 ermitteln kann. Hierdurch kann das Steuergerät 24 nicht nur die maximal zulässige Ladespannung am Speichermodul einstellen, sondern auch dafür sorgen, daß das Speichermodul 1 nach jeder Energieabgabe und -aufnahme auf eine vorgegebene, ggf. mit der Temperatur variierende Arbeitsspannung zurückgeführt wird. Ist dem Speichermodul 1 z.B. für einen Startoder Beschleunigungsvorgang Energie entnommen worden, so gibt das Steuergerät 24 dem Wechselrichter 4 danach vor, die elektrische Maschine 5 als Generator zu betreiben und die erzeugte Energie in den Zwischenkreis 3 zu speisen, von wo sie über den DC-DC-Wandler 2 dem Speichermodul 1 zugeführt wird. Hat das Speichermodul 1 hingegen rekuperierte Bremsenergie aufgenommen, so wird diese Energie nachfolgend durch den DC-DC-Wandler 2 wieder langsam in den Zwischenkreis 3 zurückgeführt und in den elektrochemischen Speicher 20 gespeist oder für Lasten verwendet.

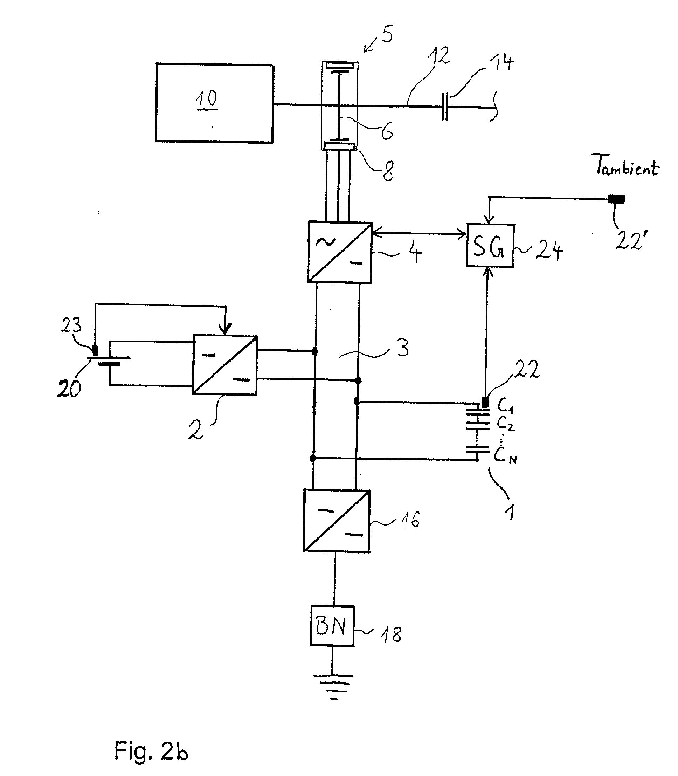

Das Ausführungsbeispiel der Fig. 2b stimmt weitgehend mit dem der Fig. 2a überein, so daß zur Vermeidung von Wiederholungen hinsichtlich der Übereinstimmungen auf die obigen Ausführungen verwiesen wird. Der augenfälligste Unterschied besteht darin, daß bei Fig. 2b das Speichermodul 1 elektrisch direkt im Zwischenkreis 3 liegt, während der elektrochemische Speicher 20 über einen DC-DC-Wandler 2 mit dem Zwischenkreis 3 verbunden ist. Der DC-DC-Wandler wird demnach nicht vom Steuergerät 24 gesteuert, sondern wird in Abhängigkeit von der am elektrochemischen Speicher 20 durch den Fühler 23 gemessenen Temperatur eingestellt. Hierdurch kann der dem Speicher 20 entnommene Strom aktiv eingestellt werden, z.B kann bei tiefen Temperaturen nur ein geringer Entladestrom zugelassen werden und so ein Versagen der Batterie bei einem Kaltstart vermieden werden.

Außerdem erhält das Steuergerät 24 nicht nur temperaturbezogenen Informationen von dem an den Kondensatorspeichern angeordneten Fühler 22, sondern ein weiterer Temperaturfühler 22' mißt auch die Umgebungstemperatur T_{ambient}. Bei der Berechnung der maximal zulässigen Spannung und/oder der Arbeitsspannung verwendet das Steuergerät bei diesem Ausführungsbeispiel nämlich auch die maximalen Umgebungstemperaturen der letzten 1-3 Tage als Erwartungswert für die zukünftigen Höchstwerte der Umgebungstemperatur. Insbesondere bei Stillstand des Fahrzeugs wird hierdurch die Sicherung der Kondensatorspeicherung vor temperaturbedingter Alterung noch weiter erhöht.

Fig. 3 zeigt ein Beispiel für die Temperaturabhängigkeit der maximalen Ladespannung Uₘₐₓ und der Arbeitsspannung U_{A} eines Speichermoduls 1, wie sie z.B. dem DC-DC-Wandler 2 von dem Steuergerät 24 vorgegeben wird. Der vom Hersteller angegebene Spannungs-Arbeitsbereich liegt zwischen 0 und U_{N}, z.B. zwischen 0 und 2,3 V für jeden einzelnen Kondensatorspeicher. Für ein Speichermodul aus einer Reihenschaltung von Kondensatorspeichern erhält man U_{N} durch Multiplikation der maximalen Spannung eines Kondensators mit der Anzahl der hintereinander geschalteten Kondensatoren. In Fig. 3 ist U_{N} durch eine gestrichelten Linie gekennzeichnet. Die vom Steuergerät 24 vorgegebene maximal zulässige Spannung Uₘₐₓ nimmt beispielsweise linear mit ansteigender Temperatur ab. Uₘₐₓ liegt bei mittleren und hohen Temperaturen innerhalb des Arbeitsbereichs, bei Temperaturen unterhalb T_{L} werden jedoch auch höhere Spannungen als U_{N} zugelassen. T_{L} liegt z.B. bei 0°C. Die vom Steuergerät 24 vorgegebene Arbeitsspannung U_{A} beträgt bei allen Temperaturen in etwa zwei Drittel der maximal zulässigen Spannung Uₘₐₓ, U_{A} nimmt also mit steigenden Temperaturen ebenfalls beispielsweise linear ab.

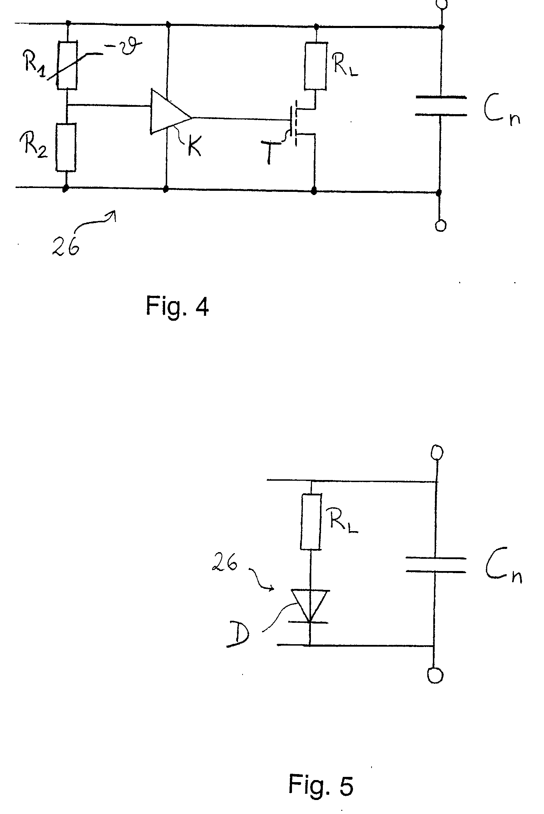

In den Figuren 4 und 5 sind Beispiele für temperaturabhängige Symmetrierschaltungen gezeigt. Durch die Symmetrierschaltung wird die Spannung jedes einzelnen Kondensatorspeichers C₁,C₂,...,C_{N} überwacht und dieser bei Überschreiten einer vorgegebenen Spannung und/oder einer vorgegebenen Temperatur über einen parallel geschalteten Lastwiderstand R_{L} auf den zulässigen Wert entladen. Figur 4 und 5 zeigen jeweils einen einzelnen Kondensator Cₙ der Reihenschaltung von Kondensatoren C₁,C₂,...,C_{N} des Speichermoduls 1. Parallel zu Cₙ ist ein Lastwiderstand R_{L} über ein temperaturabhängiges Schaltelement 26 zuschaltbar. Bei der in Figur 4 gezeigten Schaltung umfaßt dieses Schaltelement 26 im wesentlichen einen Transistor T, z.B. einen bipolaren Transistor oder einen Feldeffekttransistor, z.B. MOSFET. Das Gate des Transistors T ist mit dem Ausgang einer Komparators K verbunden, welcher die an zwei Widerständen R₁ und R₂ anliegenden Spannungen vergleicht. Bei einem dieser Widerstände, R₁, handelt es sich um einen Heißleiter oder NTC-Widerstand, dessen Widerstand mit steigender Temperatur sinkt. Bei niedrigen Temperaturen ist R₁ größer R₂, und der Transistor T befindet sich im Sperrbereich, so daß der Kondensatorspeicher C_{N} nicht über R_{L} entladen wird. Mit steigenden Temperaturen jedoch nimmt der Widerstand von R₁ ab und unterschreitet bei einer vorgegebenen Temperatur den Widerstandswert von R₂. Der Komparator schaltet daher seine Ausgangsspannung um. Hierdurch wird der Kanal zwischen Drain und Source des Transistors leitend. Bei Überschreiten einer bestimmten Temperatur wird also der Lastwiderstand R_{L} zugeschaltet und der Kondensatorspeicher Cₙ zumindest teilweise entladen. Hierdurch wird eine vorzeitige Alterung des Kondensatorspeichers Cₙ bei hoher Temperatur und gleichzeitiger Spannungsbeaufschlagung verhindert.

Die in Figur 5 gezeigte Schaltung hat eine ähnliche Funktionsweise, hier umfaßt das temperaturabhängige Schaltelement 26 anstelle von Transistor, Komparator und Heißleiter allerdings nur eine einzelne Diode D mit intrinsischem Temperaturgang. Bei niedrigen Temperaturen sperrt die Diode D, so daß der Kondensatorspeicher Cₙ nicht über den Lastwiderstand R_{L} entladen wird. Bei Überschreiten einer vorgegebenen Temperatur bricht die Diode D jedoch durch, so daß Kondensatorspeicher Cₙ auf den zulässigen Wert entladen und somit eine vorzeitige Alterung des Kondensators vermieden wird.

## Patentansprüche

1. System zur Speicherung von elektrischer Energie, z.B. in einem Kraftfahrzeug, mit
- einem Speichermodul (1) aus einem oder mehreren Kondensatorspeichern (C₁,...,C_{N}),
- einer Einrichtung (22, R₁) zur Messung der Temperatur der oder in der Nähe der Kondensatorspeicher (C₁,..,C_{N}), und
- einer oder mehreren Steuereinrichtungen (24, 26), welche die an den Kondensatorspeichern (C₁,...,C_{N}) anliegende Spannung derart steuern, daß die maximal an dem Speichermodul (1) und/oder an den einzelnen Kondensatorspeichern (C₁,...,C_{N}) anliegende Spannung mit abnehmender Temperatur zunimmt.

2. Energiespeichersystem nach Anspruch 1, wobei die Kondensatorspeicher (C₁,...,C_{N}) elektrochemische Kondensatoren, insbesondere Doppelschicht-Kondensatoren oder Mischformen aus Doppelschicht-Kondensatoren und chemischen Speichern, wie z.B. Faraday'sche Kondensatoren, sind.

3. Energiespeichersystem nach Anspruch 1 oder 2, wobei eine leistungselektronische Funktionseinheit (2) die Ladespannung am Speichermodul (1) einstellt und eine Steuereinrichtung (24) der leistungselektronischen Funktionseinheit (2) eine maximale Ladespannung (Uₘₐₓ) vorgibt, die mit abnehmender Temperatur zunimmt.

4. Energiespeichersystem nach einem der vorstehenden Ansprüche, welches zusätzlich einen Langzeitspeicher (20), insbesondere einen elektrochemischen Speicher aufweist.

5. Energiespeichersystem nach einem der vorstehenden Ansprüche, bei welchem die elektrische Energie zum Aufladen des Speichermoduls (1) und/oder des Langzeitspeichers (20) von einem Generator (5) bereitgestellt wird, der von einem Verbrennungsmotor (10) angetrieben wird.

6. Energiespeichersystem nach Anspruch 5, bei welchem der Generator (5) eine Drehstrommaschine ist und die vom Generator (5) erzeugte Spannung durch einen Gleichrichter (4) in einen Gleichspannungs-Zwischenkreis (3) gespeist wird.

7. Energiespeichersystem nach Anspruch 5 oder 6, bei welchem der Generator (5) ein Kurbelwellen-Starter-Generator ist.

8. Energiespeichersystem nach Anspruch 3 und 6, bei welchem die leistungselektronische Funktionseinheit (2) und/oder der Langzeitspeicher (20) an den Gleichspannungs-Zwischenkreis (3) angeschlossen sind.

9. Energiespeichersystem nach einem der vorstehenden Ansprüche, wobei die Spannungsdifferenzen zwischen einzelnen, in Reihe geschalteten Kondensatorspeichern (Cₙ) des Speichermoduls (1) durch eine Symmetrierschaltung dadurch ausgeglichen werden, daß parallel zu jedem Kondensatorspeicher (Cₙ) ein Lastwiderstand (R_{L}) zuschaltbar ist, über welchen der Kondensatorspeicher (Cₙ) zumindest teilweise entladbar ist.

10. Energiespeichersystem nach Anspruch 9, wobei der Lastwiderstand (R_{L}) durch ein temperaturempfindliches Schaltelement (26) bei Überschreiten einer bestimmten Temperatur zugeschaltet wird.

11. Energiespeichersystem nach Anspruch 10, wobei das temperaturempfindliche Schaltelement (26) einen NTC-Widerstand (R₁) oder eine temperaturabhängige Diode (D) umfaßt.

12. Verfahren zum Betreiben eines Energiespeichersystems mit einem Speichermodul (1) aus einem oder mehreren Kondensatorspeichern (C₁,...,C_{N}), z.B. in einem Kraftfahrzeug, bei welchem die an den Kondensatorspeichern (C₁,...,C_{N}) anliegende Spannung derart gesteuert wird, daß die maximal an dem Speichermodul (1) und/oder an den einzelnen Kondensatorspeichern (C₁,...,C_{N}) anliegende Spannung mit abnehmenden Temperaturen auf einen höheren Wert eingestellt wird.

13. Verfahren nach Anspruch 12, bei welchem das Energiespeichersystem nach einem der Ansprüche 1-11 ausgestaltet ist.

14. Verfahren nach Anspruch 12 oder 13, wobei einer Steuereinrichtung (24) eine von der angestrebten Lebensdauer der Kondensatorspeicher (C₁,...,C_{N}) abhängige mittlere Arbeitsspannung (U_{A}) vorgegeben wird, und wobei die Steuereinrichtung (24) die leistungselektronische Funktionseinheit (2) und/oder den Generator (5) so steuert, daß die Spannung des Speichermoduls (1) nach jeder Energieaufnahme oder -abgabe auf die Arbeitsspannung (U_{A}) zurückgeführt wird.

15. Verfahren nach Anspruch 14, bei welchem die Steuereinrichtung (24) die Arbeitsspannung (U_{A}) in Abhängigkeit von der Temperatur der Kondensatorspeicher (C₁,...,C_{N}) so anpaßt, daß die Arbeitsspannung (U_{A}) mit abnehmender Temperatur zunimmt.

16. Verfahren nach einem der Ansprüche 12-15, wobei die Kondensatorspeicher (C₁,...,C_{N}) bei Temperaturen unterhalb einer vorgegebenen Grenze (T_{L}) auf Spannungen oberhalb des Arbeitsbereichs (U_{N}) aufgeladen werden.

17. Verfahren nach einem der Ansprüche 12-16, bei welchem die Kondensatorspeicher (C₁,...,C_{N}) vor dem Starten des Verbrennungsmotors (10) durch Entnahme aus dem Langzeitspeicher (20) auf von der momentanen Kondensatorspeicher-Temperatur abhängige Spannungen aufgeladen werden und beim Starten die gesamte oder einen Teil der Startenergie an einen elektrischen Starter (5) liefern.
